# FASCICULE DE BREVET EUROPEEN

(11) **EP 3 631 430 B1**
(45) Date de publication et mention de la délivrance du brevet: **25.08.2021**
(21) Numéro de dépôt: 18728080.5
(22) Date de dépôt: 24.05.2018
(51) Int. Cl.: B01L 3/00, G01N 27/28

(54) **CARTOUCHE DE MESURE ÉLECTROCHIMIQUE**
ELEKTROCHEMISCHE MESSKASSETTE
ELECTROCHEMICAL MEASUREMENT CARTRIDGE

(30) Priorité: 26.05.2017 FR 1754660
(43) Date de publication de la demande: 08.04.2020
(73) Titulaire: Commissariat à l'Energie Atomique et aux Energies Alternatives, 75015 Paris (FR)
(72) Inventeur: GOUZE, Eric, 38054 Grenoble Cedex 9 (FR); BOTTAUSCI, Frédéric, 38054 Grenoble Cedex 9 (FR); FUCHS, Olivier, 38054 Grenoble Cedex 9 (FR); MAILLEY, Pascal, 38054 Grenoble Cedex 9 (FR)
(74) Mandataire: INNOV-GROUP
(86) Numéro de dépôt international: PCT/EP2018/063719
(87) Numéro de publication internationale: WO 2018/215617

(56) Documents cités:
- WO-A1-85/04719
- DE-A1- 10 233 237
- US-A1- 2012 240 656
- US-A1- 2014 099 646

## Description

### Domaine technique de l'invention

La présente invention se rapporte à une cartouche de mesure électrochimique portant un capteur ou un ensemble de capteurs.

L'invention concerne également un dispositif de mesure électrochimique qui comporte ladite cartouche et un ensemble de commande et de traitement destiné notamment à lire les signaux générés par le capteur de la cartouche.

### Etat de la technique

Un dispositif de mesure électrochimique classique permet de mesurer sélectivement la concentration de composés chimiques dans des fluides. Il utilise un capteur comprenant au moins une électrode de mesure et une électrode de référence et éventuellement une contre-électrode et un lecteur destiné à interpréter les signaux électriques reçus en provenance du capteur. Dans le capteur, les électrodes peuvent être agencées suivant différentes configurations.

Il est connu que les mesures générées par les capteurs de type électrochimiques sont susceptibles de dériver dans le temps. Pour limiter ces dérives, les capteurs doivent être calibrés lors de leur mise en service puis "recalibrés" régulièrement en fonction des conditions d'utilisation, permettant ainsi d'assurer une certaine cohérence dans les mesures réalisées au cours du temps.

Une phase de calibration d'un capteur électrochimique est réalisée en immergeant ses électrodes dans une solution de référence dont les caractéristiques sont connues. La phase totale de calibration du capteur peut comporter plusieurs immersions successives des électrodes dans une ou plusieurs solutions de référence, entrecoupées de phases de nettoyage des électrodes du capteur.

En règle générale, une telle phase de calibration est réalisée manuellement, c'est-à-dire qu'un opérateur est chargé d'effectuer les différentes immersions dans chaque solution de référence et de nettoyer les électrodes du capteur entre chaque immersion.

On comprend aisément que cette opération peut s'avérer longue et fastidieuse et qu'elle est peu adaptée à une utilisation du capteur sur le terrain.

Le document WO2013/090882A1 propose un système de calibration d'un capteur électrochimique automatisé dans lequel la solution de référence pour calibration est amenée régulièrement vers le capteur pour sa calibration. Ce système s'avère cependant complexe à mettre en œuvre, nécessitant l'emploi de pompes, de vannes et d'une électronique de commande.

Le document WO85/04719A1 décrit pour sa part un système d'analyse chimique utilisant une cartouche. La cartouche comporte une carte transparente, un cylindre multi-chambres rotatif, des capteurs et une chambre de mesure présente sur la carte qui est en contact avec les capteurs et dans laquelle le fluide issu de l'une des chambres du cylindre est injectée pour analyse par les capteurs.

Cette solution s'avère très encombrante et non adaptée à un dispositif portable. De plus, elle présente l'inconvénient d'utiliser une seule chambre d'analyse, celle-ci recevant le fluide issu d'une première chambre du cylindre rotatif lorsque celui-ci est dans une première position et le fluide issu d'une deuxième chambre du cylindre rotatif lorsque celui-ci est dans une deuxième position. Cette solution ne permet pas d'effectuer plusieurs mesures successives sans consommer trop de fluide car elle nécessite à chaque fois d'évacuer le fluide présent dans la chambre d'analyse avant chaque nouvelle mesure.

Le document DE 102 33 237 A1 décrit un récipient pour une sonde de mesure , qui contient une première substance dans laquelle la sonde de mesure peut être introduite au moins partiellement et qui présente un réceptacle pour la sonde de mesure, une manipulation plus simple est obtenue par un dispositif de stockage dans laquelle la première substance et, le cas échéant, une autre substance peuvent être disposées séparément l'une de l'autre, et par un dispositif de positionnement duquel le dispositif de stockage et/ou le récipient peuvent être déplacés de telle sorte que la sonde de mesure peut être introduite sélectivement au moins partiellement dans la première substance et, le cas échéant, dans une autre substance.

US2014099646 A divulgue un système comprenant : une cartouche jetable comprenant : un corps de cartouche avec un moule de seringue ; un insert cylindrique connecté de manière rotative au corps de la cartouche, l'insert cylindrique comprenant une chambre de rupture reliée fluidiquement à un premier orifice ; au moins une chambre reliée fluidiquement à un deuxième orifice ; des premier et second canaux allongés disposés sur des positions radiales opposées d'un bord inférieur de l'insert cylindrique, chacun traversant au moins une partie du bord inférieur de l'insert cylindrique, le premier canal allongé étant isolé de manière fluide du second canal allongé, le premier canal allongé étant relié de manière fluide à une première paire d'orifices de canal disposés à une première position radiale et le second canal allongé étant relié de manière fluide à une seconde paire d'orifices de canal disposés à une seconde position radiale ; une puce avec une sonde biologique.

Le but de l'invention est donc de proposer un dispositif de mesure électrochimique, permettant notamment de réaliser une calibration du capteur qui soit fiable, simple et qui offre d'autres fonctionnalités particulièrement avantageuses, notamment de ne pas perdre le fluide employé pour la mesure de calibration. Un avantage indirect est qu'un fluide de rinçage pourra également servir de solution de stockage entre deux mesures, ce qui préserve le capteur du milieu d'analyse généralement susceptible d'encrasser le capteur. Le dispositif de l'invention pourra notamment présenter une architecture particulièrement compacte, le rendant facilement transportable et utilisable partout.

### Exposé de l'invention

Ce but est atteint par une cartouche de mesure électrochimique qui comporte :
- Un conteneur comprenant plusieurs compartiments,
- Un couvercle fixé sur ledit conteneur de manière à former dans ladite cartouche un volume interne définissant au moins une première chambre destinée à recevoir un premier fluide à analyser et une deuxième chambre destinée à recevoir un deuxième fluide,
- Des moyens d'étanchéité pour isoler hermétiquement la première chambre de la deuxième chambre,
- Un capteur de mesure électrochimique comportant au moins une électrode de travail et une électrode de référence et solidaire dudit couvercle,
- Ledit conteneur et couvercle étant agencés mobiles l'un par rapport à l'autre pour conférer à la cartouche au moins deux configurations de fonctionnement distinctes, une première configuration dans laquelle le capteur est placé dans la première chambre pour rentrer en contact du premier fluide présent dans ladite première chambre et réaliser une première mesure sur le premier fluide et une deuxième configuration dans laquelle le capteur est placé dans la deuxième chambre pour rentrer en contact dudit deuxième fluide présent dans ladite deuxième chambre et réaliser une deuxième mesure sur le deuxième fluide,
- Des moyens d'entraînement coopérant avec le conteneur et le couvercle pour assurer un mouvement relatif du conteneur par rapport au couvercle et pour conférer à la cartouche sa première configuration ou sa deuxième configuration.

Selon une particularité, le conteneur comporte un boîtier cylindrique en forme de barillet présentant un axe de révolution et en ce que lesdits compartiments sont formés par des parois radiales autour de son axe de révolution.

Selon une réalisation particulière, le couvercle a la forme d'un cône portant ledit capteur sur son flanc et agencé fixe par rapport audit barillet.

Selon une autre réalisation particulière, le couvercle a la forme d'un disque portant ledit capteur et agencé fixe par rapport audit barillet.

Selon une autre particularité, lesdits moyens d'étanchéité comportent au moins un joint agencé entre le boîtier du conteneur et le couvercle de la cartouche.

Selon une autre particularité, le joint comporte une structure en treillis.

Selon une autre particularité, le capteur comporte plusieurs électrodes et chaque électrode du capteur comporte une pastille agencée à fleur d'une surface du couvercle.

Selon une autre particularité, la cartouche comporte au moins une première ouverture de remplissage/vidange débouchant dans ladite première chambre.

Selon une réalisation particulière, la première chambre comporte un volume élargi par rapport à celui de la deuxième chambre, et en ce que ledit couvercle comporte une deuxième ouverture de remplissage/vidange placée de manière à déboucher dans ladite première chambre dans ladite première configuration et à être obturée dans ladite deuxième configuration.

Selon une autre particularité, le capteur fait partie d'un ensemble capteur comportant également une thermistance.

L'invention concerne également un dispositif de mesure électrochimique, qui comporte :
- Une cartouche de mesure électrochimique telle que définie ci-dessus,
- Des moyens d'entraînement mécanique agencés pour coopérer mécaniquement avec ladite cartouche de mesure électrochimique pour assurer un mouvement relatif du conteneur de la cartouche par rapport au couvercle de la cartouche,
- Un ensemble de commande et de traitement, agencé pour commander lesdits moyens d'entraînement mécanique et ledit capteur en fonction d'une séquence de commande déterminée.

Selon une particularité, lesdits moyens d'entraînement mécanique et ledit ensemble de commande et de traitement sont regroupés dans un socle sur lequel est assemblée la cartouche de mesure électrochimique.

Selon une autre particularité, le socle comporte une pièce intermédiaire sur laquelle est fixée ladite cartouche et le dispositif comporte un capot venant recouvrir ladite cartouche et se fixer sur ladite pièce intermédiaire.

Selon une autre particularité, le dispositif comporte un organe d'appui agencé entre ledit capot et ladite cartouche.

Selon une autre particularité, le dispositif comporte des organes de connexion électrique agencés sur la cartouche et sur le socle et connectés audit capteur et à l'ensemble de commande et de traitement.

Selon une autre particularité, les moyens d'entraînement mécanique comportent au moins un moteur électrique doté d'un arbre rotatif sur lequel est positionnée la cartouche.

### Brève description des figures

D'autres caractéristiques et avantages vont apparaître dans la description détaillée qui suit faite en regard des dessins annexés dans lesquels :
- Les figures 1A et 1B représentent de manière schématique la structure d'un dispositif de mesure électrochimique, respectivement dans une configuration à deux électrodes et dans une configuration à trois électrodes ;
- La figure 2 représente de manière schématique, le dispositif de mesure électrochimique selon un premier mode de réalisation de l'invention ;
- La figure 3 représente, vu en perspective, le dispositif de mesure électrochimique de la figure 2 ;
- La figure 4 représente, vue en éclaté et en transparence, la cartouche de mesure électrochimique selon le premier mode de réalisation de l'invention ;
- La figure 5 représente de manière schématique et en éclaté, le dispositif de mesure électrochimique selon un deuxième mode de réalisation de l'invention ;
- La figure 6 représente, vue en perspective, la pièce intermédiaire employée dans le dispositif de mesure électrochimique selon le deuxième mode de réalisation de l'invention ;
- La figure 7 représente, vue en éclaté, la cartouche de mesure électrochimique selon le deuxième mode de réalisation de l'invention ;
- Les figures 8A et 8B représente, vu en perspective et vu de dessus, le conteneur de la cartouche de mesure électrochimique selon le deuxième mode de réalisation de l'invention ;
- Les figures 9A et 9B illustrent un principe de fonctionnement de la cartouche dans le deuxième mode de réalisation de l'invention ;
- Les figures 10A et 10B illustrent le principe de fonctionnement d'un dispositif de mesure électrochimique conforme à l'invention ;

Dans la suite de la description, l'indice .1 est utilisé pour faire référence au premier mode de réalisation du dispositif et l'indice .2 est utilisé pour faire référence au deuxième mode de réalisation du dispositif.

### Description détaillée d'au moins un mode de réalisation

L'invention concerne notamment une cartouche 1.1, 1.2 de mesure électrochimique particulière, destinée à être employée dans un dispositif de mesure électrochimique.

Cette cartouche permet au dispositif de pouvoir être calibré aisément, et sans intervention manuelle lorsque le dispositif est doté de moyens d'entrainement mécanique.

Un dispositif de mesure électrochimique comporte classiquement au moins :
- Un capteur doté d'au moins deux électrodes, dont le principe de fonctionnement est explicité ci-dessous, et
- Un lecteur L connecté électriquement au capteur et destiné à interpréter les signaux générés par le capteur.

Le capteur employé est de type électrochimique. Un capteur électrochimique fonctionne sur le principe d'échange d'électrons entre une électrode, de nature métallique ou carbonée, et un milieu liquide contenant les espèces moléculaires ciblées. Les réactions observées sont soit des réactions d'oxydo-réduction (réactions directes à l'électrode, mesures (M) dynamiques de types ampérométrique ou voltampérométrique) soit des phénomènes capacitifs (mesures potentiométriques liées à des effets d'accumulation de charge). Pour des capteurs, la réaction ciblée a donc lieu respectivement, soit directement à la surface de l'électrode soit au sein d'une membrane à base de polymère permettant d'obtenir la sélectivité du capteur vis-à-vis de l'espèce moléculaire ciblée.

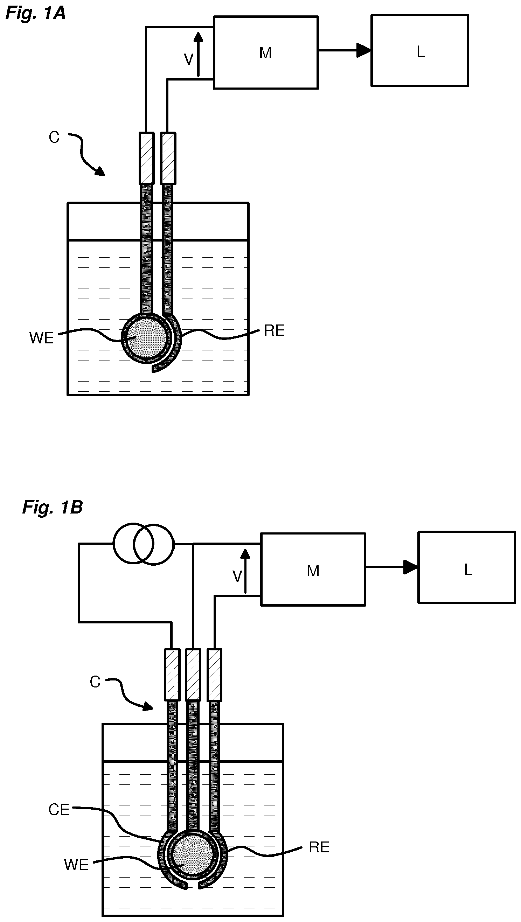

Un capteur électrochimique se présente suivant plusieurs architectures distinctes. Il comporte au moins deux électrodes destinées à être plongées dans un fluide à analyser. De manière non limitative, les figures 1A et 1B représentent deux configurations de capteur distinctes.

Dans une première réalisation illustrée par la figure 1A, un capteur électrochimique comporte uniquement deux électrodes, une électrode dite de travail (WE) et une électrode de référence (RE), réputée insensible aux variations du milieu à mesurer. Il s'agit alors d'observer l'écart de tension (V) entre l'électrode de travail et l'électrode de référence. On parle dans ce cas de mesure "potentiométrique".

Par ailleurs, il existe notamment un capteur électrochimique potentiométrique dit "tout solide", basé notamment sur l'utilisation d'une électrode nano-structurée hydrophobe sur laquelle est déposée une membrane sélective. Cette membrane est par exemple un mélange de polymère amorphe (PVC, PU...), d'un agent sélectif (ionophore) permettant la capture de l'ion ciblé par complexation, d'un plastifiant, de charges ioniques aliphatiques et d'un solvant sacrificiel. Le solvant fluidifie le mélange pour permettre son dépôt sur l'électrode, puis s'évapore. Le capteur employé dans la cartouche 1 de l'invention sera avantageusement de ce type "tout" solide.

Dans une deuxième réalisation illustrée par la figure 1B, pour pousser le potentiel de l'électrode de travail hors équilibre par rapport à l'électrode de référence, on ajoute une contre-électrode (CE). Le courant traversant le circuit électrochimique entre l'électrode de mesure et la contre-électrode est mesuré pour un potentiel donné. Cette mesure est effectuée soit à tension WE-RE constante (mesure "ampérométrique"), soit en effectuant un balayage en tension (rampe, créneaux, escalier...) et en caractérisant le pic/plateau de courant obtenu (mesure "voltampérométrique"), soit en imposant une variation par saut de courant entre les électrodes WE et RE (mesure chrono-potentiométrique), soit enfin en mesurant le signal résultant (courant ou tension) d'une stimulation modulée en potentiel entre les électrodes WE et RE ou en courant entre les électrodes WE et CE (mesure dite de spectroscopie d'impédance électrochimique si la consigne est multi-fréquences ou de conductivité si la consigne est mono-fréquence). Cette mesure peut être effectuée soit sur électrode nue, soit sur électrode modifiée (par exemple par une membrane semi-perméable, une enzyme, un catalyseur, pouvant être déposé à la surface de l'électrode pour augmenter la sélectivité de la mesure).

L'invention décrite ci-dessous ne portant pas sur l'architecture du capteur électrochimique elle-même, mais sur l'utilisation d'un capteur dans un dispositif de mesure, il faut cependant comprendre que le capteur pourra prendre différentes configurations possibles.

De manière non limitative, dans la suite de la description, on considérera que le capteur employé dans le dispositif de mesure électrochimique de l'invention est à deux électrodes, c'est-à-dire incluant une électrode de travail et une électrode de référence. Le capteur pourra être intégré dans un ensemble capteur C du dispositif de mesure électrochimique pouvant comporter également une thermistance destinée à mesurer la température du fluide des solutions de mesure et d'autres capteurs.

Selon un aspect particulier de l'invention, le dispositif de mesure électrochimique comporte :
- Une cartouche 1.1, 1.2 de mesure électrochimique, qui comporte notamment un ensemble capteur C comprenant au moins ledit capteur de mesure électrochimique ;
- Un ensemble de commande et de traitement 20.1, 20.2, cet ensemble de commande et de traitement 20 comprenant pour sa part le lecteur L ;
- Des moyens d'entraînement 21.1, 21.2destinés à coopérer mécaniquement avec la cartouche 1.1, 1.2 et à être commandés par l'ensemble de commande et de traitement 20.1, 20.2 ;

De manière non limitative, on verra que l'ensemble de commande et de traitement 20.1, 20.2 et les moyens d'entraînement 21.1, 21.2 sont avantageusement regroupés dans un même socle 2.1, 2.2, la cartouche 1.1, 1.2 étant destinée à venir se fixer de manière amovible sur ce socle 2.1, 2.2.

Par le terme "amovible", il faut comprendre que la cartouche peut s'assembler et se désassembler aisément du socle, uniquement par un mouvement manuel simple d'une partie par rapport à l'autre.

La cartouche 1.1, 1.2 de mesure électrochimique de l'invention se présente plus particulièrement sous une architecture en plusieurs éléments principaux :
- Un conteneur 10.1, 10.2 comprenant plusieurs compartiments 100.1, 100.2 ;
- Un couvercle 11.1, 11.2 supportant le capteur; Selon le mode de réalisation, ce couvercle 11.1, 11.2 pourra prendre la forme respectivement d'un cône ou d'un disque ;
- Des moyens de maintien et d'entraînement assurant notamment une fonction de maintien entre le conteneur 10.1, 10.2 et le couvercle 11.1, 11.2 et coopérant mécaniquement avec l'un de ces deux éléments pour permettre sa rotation par rapport à l'autre ;

Selon un aspect particulier de l'invention, le conteneur et le couvercle sont mobiles l'un par rapport à l'autre. Autrement dit, selon deux configurations possibles, soit le conteneur 10.1, 10.2 est entraîné en mouvement par rapport au couvercle 11.1, 11.2 qui est fixe, soit le couvercle 11.1, 11.2 est entraîné en mouvement par rapport au conteneur 10.1, 10.2 qui est fixe.

Les différents compartiments 100.1, 100.2 du conteneur sont destinés à former plusieurs chambres dans la cartouche, par exemple :
- Une chambre dite d'analyse ;
- Une chambre dite de calibration ;
- De manière optionnelle mais avantageuse, au moins une chambre dite de stockage et rinçage;
- De manière optionnelle mais avantageuse, une ou plusieurs autres chambres dites de calibration ;

Sur une base de trois chambres, on aura ainsi :
- Une chambre d'analyse destinée à recevoir l'échantillon à analyser
- Une chambre contenant un liquide de composition connue servant principalement à (re)calibrer le capteur.
- Une chambre de stockage/rinçage contenant un liquide de composition connue servant principalement à stocker ou rincer les capteurs ; ce liquide s'apparente donc à de l'eau « pure ».

Quelle que soit la chambre en regard de l'ensemble capteur C, le dispositif permet d'effectuer une mesure, y compris dans la chambre de stockage/rinçage pour compléter le suivi du vieillissement de la cartouche et de l'ensemble capteur.

Selon un aspect particulier de l'invention, le conteneur 10.1, 10.2 de la cartouche, qui comporte les différents compartiments 100.1, 100.2 est fixé au couvercle qui porte l'ensemble capteur C, de manière à recouvrir une surface 117.1, 117.2 dudit couvercle et à enfermer ledit capteur dans une seule chambre à la fois (lors d'une mesure et donc en dehors des périodes de mouvement relatif du conteneur vis-à-vis du couvercle).

L'ensemble capteur C est disposé de telle sorte à être mis en contact avec un seul et même fluide (contenu dans l'une des chambres).

La chambre d'analyse est destinée à recevoir le fluide à analyser. Le fluide pourra se présenter sous la forme d'un liquide, d'un gaz, d'un gel,...

Chaque chambre de calibration est destinée à recevoir une solution de référence à une concentration connue en certains composés chimiques.

La chambre de stockage/rinçage sera amenée à contenir une solution neutre par rapport au capteur.

Par chambre, on entend un volume fermé dans lequel peut être maintenu un fluide, sans que celui-ci ne puisse s'échapper vers l'extérieur. On verra cependant que pour des besoins de fonctionnement, la cartouche pourra comporter des ouvertures débouchant dans certaines chambres pour assurer le remplissage/vidange de la chambre concernée.

La cartouche 1.1, 1.2 de mesure électrochimique comporte également des moyens d'étanchéité. Ces moyens d'étanchéité comportent au moins un joint 12.1, 12.2 présentant une forme adaptée pour être agencé entre les deux éléments 10,1, 10.2, 11.1, 11.2 cités ci-dessus et assurer à la fois l'étanchéité de l'assemblage du conteneur sur le couvercle et une isolation hermétique des différentes chambres entre elles. On comprendra également que le joint d'étanchéité sera amené à assurer un nettoyage mécanique type "essuie-glace" de la surface du capteur C lors du passage du capteur d'une chambre à l'autre. Selon un aspect particulier de l'invention, chaque chambre est donc isolée de manière hermétique des autres chambres, ne permettant pas un déplacement de fluide d'une chambre à une autre. Chaque fluide présent dans une chambre reste donc dans sa chambre lors d'une mesure (et aussi lors du déplacement relatif du conteneur vis-à-vis du couvercle).

Selon une réalisation particulière et non limitative, une pièce en matériau absorbant peut également être placée dans l'une des chambres de manière à "éponger" du liquide résiduel présent sur l'ensemble capteur C.

Le dispositif de mesure électrochimique comporte également des moyens d'entraînement 21.1, 21.2 destinés à coopérer avec la cartouche 1 pour entraîner en mouvement le conteneur 10.1, 10.2 par rapport au couvercle 11.1, 11.2. Il pourra s'agir d'un dispositif de clipsage permettant de solidariser le conteneur et le couvercle et d'assurer la liaison mécanique avec l'axe du moteur pour entrainer la rotation (en pratique, un simple méplat est le plus souvent suffisant).

Grâce à la solution de l'invention, il sera ainsi possible de déplacer les compartiments par rapport à l'ensemble capteur C pour que ce dernier se trouve directement dans une chambre ou une autre de la cartouche, permettant ainsi de réaliser des mesures en venant au contact du fluide présent dans la chambre, sans déplacement de fluide entre les chambres.

La cartouche peut également comporter au moins une ouverture débouchant dans la chambre d'analyse pour le remplissage et la vidange de cette chambre d'analyse. Cette ouverture est judicieusement placée selon la configuration de la cartouche.

La cartouche peut également comporter au moins une ouverture débouchant dans la chambre d'analyse pour permettre l'évacuation de l'air lors du remplissage de ladite chambre et pouvant servir également d'orifice pour le remplissage manuel de la chambre à l'aide d'une pipette.

Comme décrit ci-dessus, un dispositif de mesure électrochimique comporte également un ensemble de commande et de traitement 20.1, 20.2.

De manière non limitative, le socle 2.1, 2.2 comprend avantageusement l'ensemble de commande et de traitement 20.1, 20.2 et les moyens d'entraînement 21.1, 21.2 en mouvement de l'un des deux éléments de la cartouche par rapport à l'autre élément.

L'ensemble de commande et de traitement peut comporter avantageusement au moins une carte électronique. La carte électronique est notamment dotée des fonctions suivantes :
- Réception des signaux de mesure en provenance du capteur ;
- Conversion des signaux reçus en données numériques (convertisseur analogique/numérique) ;
- Traitement des données numériques ;
- Gestion de différentes séquences de fonctionnement, parmi lesquelles au moins une séquence de mesure/analyse, une ou plusieurs séquences de calibration, séquence de stockage ;
- Commande des moyens d'entraînement de la cartouche en respectant une séquence de fonctionnement ;
- Affichage et/ou transmission de données obtenues après une séquence de fonctionnement de type séquence de mesure/analyse ;
- Mise en veille ;

La cartouche 1.1, 1.2 et le socle 2.1, 2.2 pourront comporter des organes de connexion mécanique et électrique pour assurer respectivement l'assemblage mécanique de la cartouche sur le socle et la connexion électrique, notamment entre l'ensemble capteur C présent dans la cartouche 1.1, 1.2 et l'ensemble de commande et de traitement présent dans le socle 2.1, 2.2.

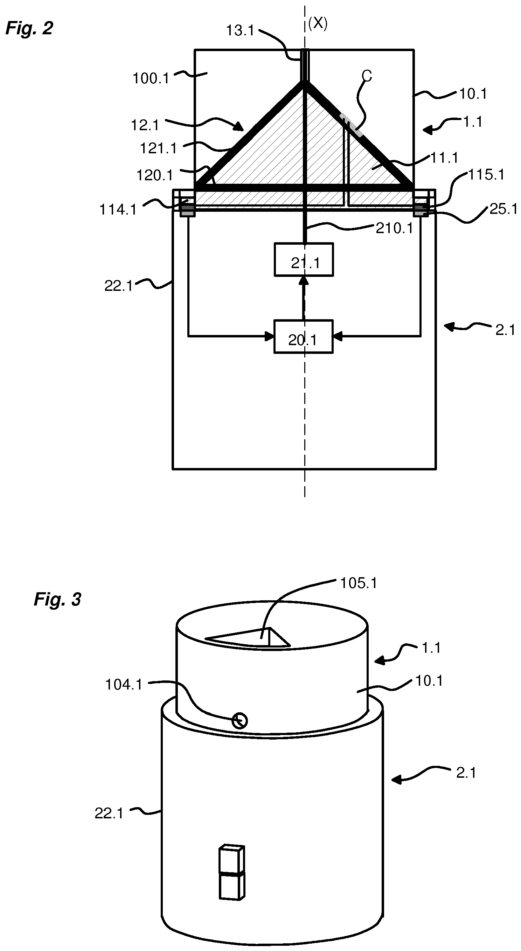

Un premier mode de réalisation particulier d'un dispositif de mesure électrochimique conforme à l'invention est représenté sur les figures 2 à 4.

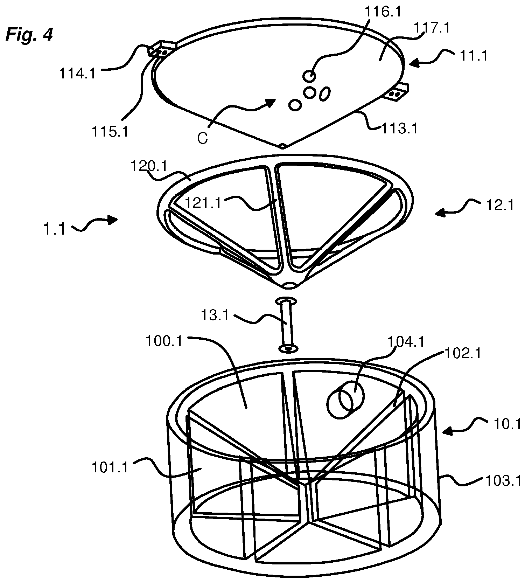

De manière plus précise, en référence à la figure 4, la cartouche 1.1 de mesure électrochimique se présente par exemple sous la forme d'un conteneur ayant une forme générale de cylindre de révolution.

Dans ce premier mode de réalisation, le conteneur 10.1 comporte un boîtier 103.1 cylindrique présentant une paroi de base en forme de disque, une paroi latérale et une ouverture à l'opposé de sa paroi de base. Il comporte une surface interne à l'intérieur de son volume et une surface externe à l'extérieur de son volume.

Son volume interne est séparé en plusieurs compartiments 100.1 répartis autour de son axe (X). Chaque compartiment 100.1 est ainsi défini par une portion angulaire du cylindre. Chaque compartiment 100.1 est défini entre deux parois 101.1 radiales internes, chaque paroi radiale 101.1 s'étendant de l'axe du cylindre vers la surface interne de la paroi latérale. Chaque paroi radiale 101.1 comporte une arête supérieure 102.1 libre qui suit une pente inclinée vers le bas, de l'extérieur vers l'axe du cylindre, ladite pente étant par exemple comprise entre 30° et 80° par rapport à la génératrice du cylindre.

De manière non limitative, le conteneur 10.1 peut comporter cinq compartiments 100.1 de volumes identiques.

Le boîtier 103.1 comporte avantageusement une première ouverture 105.1 à travers sa paroi de base, au niveau de la chambre d'analyse et une deuxième ouverture 104.1 réalisée à travers sa paroi latérale et débouchant dans la chambre d'analyse. On verra que les deux ouvertures 104.1, 105.1 débouchant dans la chambre d'analyse pourront être employées. Si nécessaire, celles-ci pourront être obturées par un bouchon de forme adaptée.

Le couvercle comporte également un boîtier 113.1 se présentant sous la forme d'un cône formant un bouchon venant se rapporter sur l'ouverture du boîtier du conteneur pour venir fermer, grâce au joint 12.1, son ouverture de manière hermétique. Cette forme conique facilite notamment l'évacuation de l'air lorsque l'on remplit la chambre d'analyse et facilite la vidange de cette chambre.

L'inclinaison du flanc du cône est réalisée suivant une pente inclinée identique à celle des arêtes supérieures des parois radiales de la première partie.

Les moyens d'étanchéité comportent avantageusement un seul joint 12.1 de forme adaptée, par exemple en forme de treillis. Il présente une portion annulaire 120.1 de diamètre équivalent à la circonférence de l'ouverture du boîtier 103.1 du conteneur 10.1 de la cartouche et plusieurs portions 121.1 rectilignes radiales s'étendant entre un point commun axial jusqu'à sa portion annulaire. Les portions radiales 121.1 sont chacune inclinées suivant une pente identique à celle des arêtes supérieures 102.1 des parois radiales 101.1 définissant les compartiments 100.1.

Le joint 12.1 est destiné à être positionné entre le boîtier 103.1 du conteneur 10.1 de la cartouche et le boîtier 113.1 du couvercle 11.1 de la cartouche 1.1, de sorte que :
- Sa portion annulaire vienne se loger dans une gorge ou s'appuyer sur un épaulement réalisé sur le bord de l'ouverture du boîtier du conteneur 10 ;
- Ses portions radiales suivent la pente inclinée de chaque arête supérieure des parois radiales internes du conteneur 10.1 de la cartouche et celle du cône formé par le boîtier 113.1 du couvercle 11.1 ;

Lorsque le couvercle 11.1 est assemblé sur le conteneur 10.1 de la cartouche 1.1, le cône est positionné de sorte que son flanc vienne en appui contre le joint, de manière à épouser l'empreinte interne formée par les compartiments du boîtier du conteneur.

De manière non limitative, lorsque les deux éléments 10.1, 11.1 de la cartouche 1.1 sont assemblés l'un sur l'autre, séparés par le joint 12.1, la cartouche 1.1 de mesure électrochimique comporte cinq chambres, c'est-à-dire une chambre d'analyse, trois chambres de calibration et une chambre de stockage.

Le boîtier 113.1 du couvercle 11.1 est agencé pour porter l'ensemble capteur C. Comme on peut le comprendre par la configuration de la cartouche, le capteur et ses électrodes sont inclinés par rapport à un plan formant la surface du liquide dans la chambre d'analyse lorsque le dispositif est posé suivant son axe (X), permettant ainsi d'assurer la mise en communication du capteur avec le fluide dans chaque chambre de la cartouche 1.1.

Le boitier 113.1 du couvercle comporte avantageusement des organes de fixation mécanique 114.1 agencés pour coopérer avec des organes mécaniques correspondants présents sur le socle 2.1. Un ou plusieurs de ces organes de fixation mécaniques comportent avantageusement un ou plusieurs organes de connexion électrique 115.1 destinés également à se connecter à des organes de connexion 25.1 présents sur le socle 2.1 pour assurer une connexion électrique entre la cartouche 1.1 et le socle 2.1, et permettre une liaison électrique entre l'ensemble capteur C et l'ensemble de commande et de traitement 20.1.

L'ensemble capteur C comporte les électrodes du capteur électrochimique (électrode de référence RE et électrode de travail WE) agencées par exemple sous la forme de pastilles 116.1, présentant chacune une surface située à fleur du flanc du cône. Comme décrit ci-dessus, une autre pastille pourra être agencée pour capter la température du fluide.

Dans cette réalisation, la cartouche 1.1 peut comporter également un axe de rotation 13.1 suivant l'axe du barillet permettant d'entraîner le barillet en rotation. Cet axe de rotation est destiné à être monté sur l'arbre d'un moteur électrique formant lesdits moyens d'entraînement 21.1 et commandé par l'ensemble de commande et de traitement 20.1 décrit ci-dessus. Par ailleurs, l'axe 13.1 assure aussi l'assemblage du conteneur 10.1 et du couvercle 11.1 entre eux et la compression du joint situé entre les deux éléments pour obtenir l'étanchéité des chambres entre elles, même lors du mouvement du barillet par rapport au capteur C.

L'ensemble capteur C est destiné à être connecté au lecteur du dispositif pour transmettre des signaux représentatifs des mesures effectuées et/ou pour injecter depuis le lecteur vers le capteur les signaux de consignes nécessaires à la mesure, par exemple par l'intermédiaire des organes de connexion électrique 115.1 décrits ci-dessus.

En référence aux figures 2 et 3, le socle 2.1 se présente avantageusement sous la forme d'un boîtier 22.1 cylindrique sur lequel vient se connecter de manière mécanique et électrique ladite cartouche 1.1 de mesure électrochimique.

Ce boîtier 22.1 loge un moteur électrique doté d'un arbre de sortie 210.1 sur lequel vient se positionner l'axe du barillet pour être entraîné en rotation. Ce moteur sera avantageusement un moteur de type pas à pas ou un moteur à courant continu muni d'un codeur de position angulaire solidaire de l'axe de rotation, permettant de faire prendre au barillet de la cartouche 1.1 plusieurs positions distinctes par rapport au capteur C. La coopération entre le barillet et l'arbre de commande devra permettre d'assurer une compression suffisante du joint 12.1 positionné entre les deux éléments 10.1, 11.1 de la cartouche 1.1 pour conserver l'étanchéité entre les chambres durant la rotation du barillet par rapport au capteur, tout en n'entravant pas la rotation du barillet contre la surface du joint 12.1.

Ce boîtier 22.1 loge également l'ensemble de commande et de traitement 20.1, se présentant par exemple sous la forme d'une ou plusieurs cartes électroniques chargées d'exécuter les fonctions définies ci-dessus, notamment celle de lecteur pour la réception des signaux électriques en provenance du capteur C et leur interprétation.

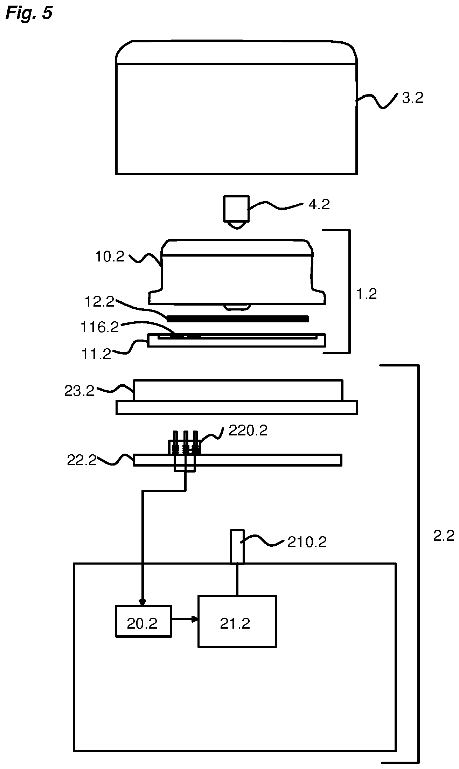

Un deuxième mode de réalisation d'un dispositif de mesure électrochimique conforme à l'invention est représenté sur les figures 5 à 9.

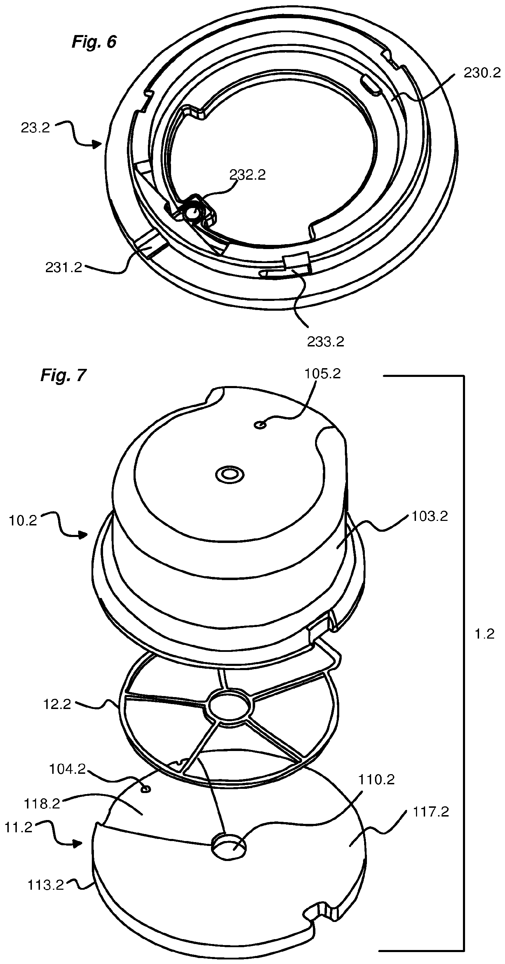

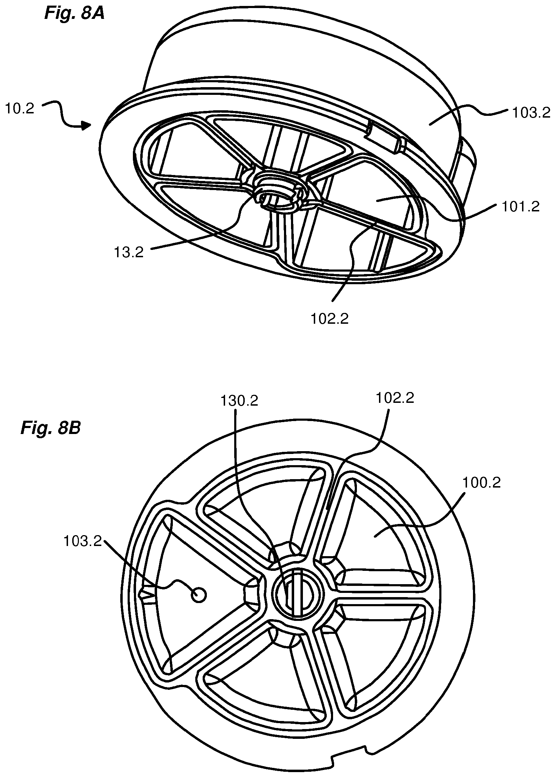

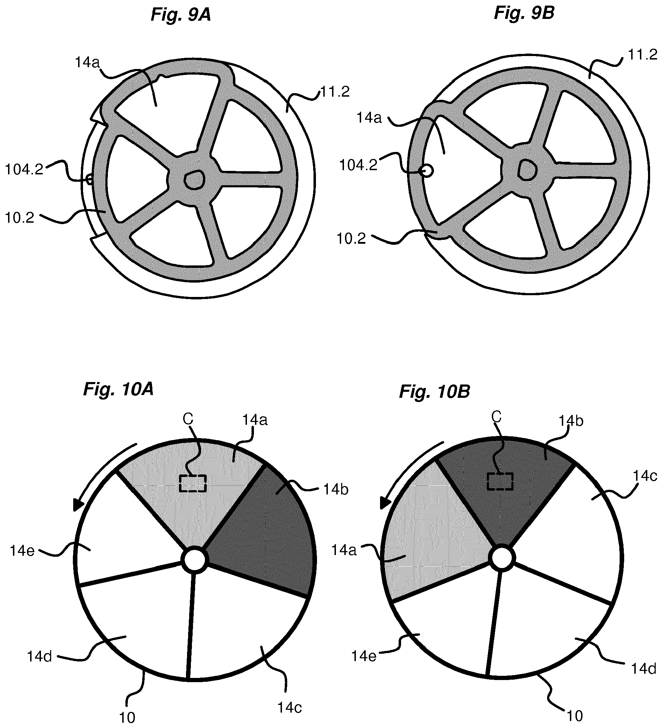

Par rapport au premier mode de réalisation décrit ci-dessus, ce deuxième mode de réalisation présente les particularités structurelles suivantes (sur les figures annexées, les références sont indiquées avec l'indice .2), son principe de fonctionnement étant globalement identique à celui du premier mode de réalisation :
- Le couvercle 11.2 de la cartouche 1.2 se présente sous la forme d'une pièce en forme de disque (113.2 - figure 7) présentant un trou central 110.2. Sa surface 117.2 comporte un emplacement 118.2 adapté pour l'ensemble capteur C. Cet emplacement se présente sous la forme d'une cavité dans laquelle est inséré l'ensemble capteur C se présentant sous la forme d'une carte découpée aux dimensions de ladite cavité. Une fois l'ensemble capteur C en place, la surface interne du disque (c'est-à-dire la surface qui est située à l'intérieur de la cartouche) est parfaitement plane.
- Le conteneur formant la cartouche 1.2 vient recouvrir au moins partiellement ladite surface 117.2 de manière à placer ledit capteur C à l'intérieur d'au moins une chambre de la cartouche.
- Les parois radiales 101.2 formant les compartiments du conteneur du conteneur 10.2 présentent des arêtes 102.2 coplanaires (figure 8A).
- Le joint 12.2 présente une structure en treillis plane et vient se loger dans des gorges qui suivent les arêtes du boîtier du conteneur 10.2 et le couvercle 11.2 est fixé sur le conteneur 10.2 de manière à assurer une compression dudit joint 12.2, garantissant une étanchéité entre les chambres et une étanchéité par rapport à l'extérieur. L'ensemble capteur C est enfermé dans une chambre du conteneur formé par l'assemblage des deux éléments.
- Le boîtier 103.2 du conteneur comporte un organe 13.2 interne axial (figure 8A) présentant une extrémité libre venant se loger dans le trou central du disque du couvercle 11.2, solidarisant les deux éléments entre eux, par exemple par clipsage, le couvercle 11.2 formant alors un couvercle recouvrant les compartiments 100.2 du conteneur pour réaliser les chambres de la cartouche.
- L'organe 13.2 interne axial comporte un passage axial doté d'un méplat 130.2 (figure 8B) dans lequel peut venir s'engager l'arbre 210.2 du moteur, en vue d'assurer la rotation du conteneur 10.2 par rapport au couvercle 11.2 de la cartouche.
- La deuxième ouverture 104.2 est réalisée à travers le couvercle 11.2.
- Le boîtier 103.2 du conteneur 10.2 est réalisé de manière à former une chambre (en l'occurrence la chambre d'analyse 14a) présentant un volume interne distinct de celui des autres chambres, de manière à mettre la deuxième ouverture 104.2 en communication avec cette chambre de mesure dans une seule position du barillet (figures 9A et 9B). La portion latérale du boîtier présente au niveau de la chambre d'analyse 14a est en effet décalée vers l'extérieur par rapport au reste de la paroi latérale du boîtier, permettant de réaliser une chambre d'analyse agrandie par rapport aux autres chambres. La deuxième ouverture 104.2 est ainsi positionnée pour communiquer avec la partie élargie de la chambre de mesure 14a dans une position du barillet (figure 9B) et pour ne pas communiquer avec le volume interne des autres chambres dans les autres positions du barillet (figure 9A).
- Les pastilles de contact 116.2 du capteur C sont connectées à une carte de circuit imprimé 22.2 fixée à ladite pièce intermédiaire 23.2 (figure 5). Le couvercle 11.2 comporte des ouvertures permettant de rendre disponibles des points de connexion auxdites pastilles.
- La carte de circuit imprimé 22.2 comporte plusieurs plots de connexion 220.2 (figure 5) par exemple fixés sur la carte 22.2 et agencés pour traverser le couvercle 11.2 sur son épaisseur pour venir en appui chacun contre un point de connexion électrique du capteur C. Les plots de connexion peuvent être de type à ressort comme représenté sur la figure 5. D'autres solutions pourraient être envisagées.
- Le socle 2.2 peut comporter une pièce intermédiaire (figure 6) permettant d'aider à la fixation de la cartouche sur le socle et de concourir à l'étanchéité du dispositif. Cette pièce intermédiaire permet donc de supporter la cartouche. Elle peut comporter un orifice de remplissage/vidange 232.2 de la cartouche, situé en vis-vis de la deuxième ouverture 104.2 de la cartouche lorsque celle-ci est fixée sur ladite pièce intermédiaire, selon les conditions de fonctionnement évoquées ci-dessus. Elle peut comporter une rigole d'étanchéité 230.2 permettant de recueillir le fluide débordant de la cartouche et une rigole d'évacuation 231.2 se présentant sous la forme d'une gargouille reliée à ladite rigole d'étanchéité et destinée à évacuer le fluide en cas de débordement. La rigole d'étanchéité et cette gargouille présentent avantageusement un plan incliné de manière à faciliter l'évacuation de liquide en dehors de la cartouche.
- Un capot 3.2 est agencé pour recouvrir en totalité la cartouche 1.2 lorsque celle-ci est positionnée sur la pièce intermédiaire 23.2 du socle.
- Le capot 3.2 coopère mécaniquement avec la pièce intermédiaire 23.2 par un mécanisme de fixation comprenant une languette prévue sur le pourtour du capot 3.2 et une encoche 233.2 réalisée sur la pièce intermédiaire 23.2 du socle.
- Un organe d'appui 4.2 peut être agencé entre le capot 3.2 et la cartouche 1.2 pour assurer un maintien de la cartouche 1.2 contre la pièce intermédiaire 23.2, garantissant l'étanchéité entre les deux éléments de la cartouche 1.2 et la connexion électrique entre l'ensemble capteur C et la carte électronique 22.2 par les plots de connexion 220.2 prévus. Cet organe d'appui peut se présenter sous la forme d'un poussoir à bille positionné entre le capot 3.2 et la cartouche 1.2, dans l'axe de la cartouche pour réaliser une sollicitation uniquement axiale de la cartouche contre le socle 2.2.

Les figures 10A et 10B permettent d'illustrer le principe de fonctionnement du dispositif de mesure électrochimique de l'invention. Le fonctionnement général est identique pour les deux modes de réalisation décrits ci-dessus.

Sur la figure 10A, le barillet est commandé dans une première position, l'ensemble capteur C est ainsi mis en communication avec le fluide présent dans une première chambre 14a de la cartouche 1, par exemple la chambre d'analyse. La cartouche 1 est donc dans une première configuration de fonctionnement.

Puis l'ensemble de commande et de traitement 20.1, 20.2 envoie une commande aux moyens d'entraînement 21.1, 21.2 pour faire tourner le barillet par rapport au capteur C. Le moteur électrique fait tourner le barillet (autour de l'axe (X)) jusqu'à une deuxième position par rapport au capteur C. Sur la figure 10B, on peut ainsi voir que le barillet, dans sa deuxième position, permet la mise en communication du capteur C avec le fluide présent dans une deuxième chambre 14b de la cartouche 1, par exemple une chambre de calibration. La cartouche 1 est donc dans une deuxième configuration de fonctionnement. Sur les figures 10A et 10B, l'ensemble capteur C pourra également être mis en communication avec le volume interne de chacune des trois autres chambres 14c, 14d, 14e après une commande adaptée des moyens d'entraînement 21 du barillet en rotation.

Dans chacune des deux configurations de la cartouche 1 représentées sur les figures 10A et 10B, l'ensemble de commande et de traitement 20.1, 20.2 peut commander l'ensemble capteur C pour recevoir des signaux de mesure. En cas de calibration, l'ensemble de commande et de traitement 20.1, 20.2 est ensuite amené à corriger les dérives dans les mesures.

Lors de la rotation du barillet par rapport au capteur C, le joint 12.1, 12.2 solidaire du barillet permet d'assurer un nettoyage par frottement de la surface du capteur.

De manière non limitative, le dispositif de mesure électrochimique tel que décrit ci-dessus peut être utilisé selon différents modes :
- La cartouche est immergée dans la solution à analyser ou connectée à une pompe. La chambre d'analyse est ouverte vers l'extérieur à la fois vers le bas (ouverture 104.1, 104.2) pour permettre son remplissage (par exemple à l'aide d'une pompe connectée sur l'ouverture via la pièce intermédiaire 23.2 dans le deuxième mode de réalisation) et vers le haut (ouverture 105.1, 105.2) pour permettre l'évacuation de l'air. Pour éviter que des bulles d'air restent prisonnières de la chambre d'analyse et fasse écran à tout ou partie du capteur.
- Cartouche vers le haut : Le cas typique d'utilisation est au laboratoire, où l'opérateur va remplir la chambre d'analyse avec un prélèvement qu'il aura effectué avec une pipette, via l'ouverture 105.1, 105.2, l'ouverture 104.1, 104.2 étant alors obturée.

De manière non limitative, une séquence de fonctionnement du dispositif de mesure est par exemple la suivante :
La cartouche est connectée mécaniquement et électriquement au socle, puis la chambre d'analyse est remplie d'un fluide à analyser. Le capteur est positionné dans la chambre de stockage (lors de sa fabrication et il est fortement conseillé de retourner en chambre de stockage après avoir fait la mesure du fluide à analyser).

Au démarrage, l'auto-calibration est lancée.
a) L'ensemble capteur C est positionné dans une première chambre de calibration 14b ;
   Le lecteur fait une mesure (par exemple toutes les 5 ou 10 secondes) jusqu'à stabilisation de la valeur mesurée ; la durée dans la première chambre sera plus longue car il faut d'abord que le capteur se réhydrate. Durée typique : 2 mn
b) Le capteur est positionné dans une deuxième chambre de calibration 14c ;
   Le lecteur fait une mesure (par exemple toutes les 5 ou 10 secondes) jusqu'à stabilisation de la valeur mesurée ; Durée typique : 1 mn
c) Le capteur est positionné dans une troisième chambre de calibration 14d ;
   Le lecteur fait une mesure (par exemple toutes les 5 ou 10 secondes) jusqu'à stabilisation de la valeur mesurée ; Durée typique : 1 mn. Le lecteur peut faire les calculs des coefficients d'étalonnage (décalage et pente) L'ensemble capteur est positionné dans la chambre de stockage et rinçage (ici c'est le rinçage qui importe) ;
d) Le capteur est positionné dans la chambre d'analyse 14a ;
   Le lecteur fait une mesure (par exemple toutes les 5 ou 10 secondes) jusqu'à stabilisation de la valeur mesurée ; Durée typique : 1 mn
e) Lorsque la fréquence de mesure est faible (par exemple toutes les heures) il est préférable de repositionner l'ensemble capteur C dans la chambre de stockage 14e entre deux mesures.
f) Suivant la précision nécessaire à la mesure, il est utile de refaire une calibration typiquement toutes les heures ou une fois par jour. La fréquence de calibration peut être ajustée par logiciel en fonction des caractéristiques de dérives intrinsèques des capteurs

Le dispositif de mesure électrochimique décrit ci-dessus présente donc un certain nombre d'avantages, parmi lesquels :
- Une architecture simple et compacte ;
- La possibilité de faire une calibration du capteur, sans aucune intervention manuelle, grâce au mouvement relatif des deux éléments de la cartouche ;
- Une utilisation polyvalente du dispositif, pour des prélèvements et analyses sur site ou en laboratoire ;
- Une architecture étanche, permettant de l'utiliser dans tous les environnements ;

## Revendications

1. Cartouche (1.1, 1.2) de mesure électrochimique, **caractérisée en ce qu'**elle comporte :
- Un conteneur (10,1, 10.2) comprenant plusieurs compartiments (100.1, 100.2),
- Un couvercle (11.1, 11.2) fixé sur ledit conteneur de manière à former dans ladite cartouche un volume interne définissant au moins une première chambre (14a) destinée à recevoir un premier fluide à analyser et une deuxième chambre (14b) destinée à recevoir un deuxième fluide,
- Des moyens d'étanchéité pour isoler hermétiquement la première chambre de la deuxième chambre,
- Un capteur de mesure électrochimique comportant au moins une électrode de travail et une électrode de référence et solidaire dudit couvercle,
- Ledit conteneur et couvercle étant agencés mobiles l'un par rapport à l'autre pour conférer à la cartouche au moins deux configurations de fonctionnement distinctes, une première configuration dans laquelle le capteur (C) est placé dans la première chambre (14a) pour rentrer en contact du premier fluide présent dans ladite première chambre et réaliser une première mesure sur le premier fluide et une deuxième configuration dans laquelle le capteur (C) est placé dans la deuxième chambre pour rentrer en contact dudit deuxième fluide présent dans ladite deuxième chambre et réaliser une deuxième mesure sur le deuxième fluide,
- Des moyens d'entraînement coopérant avec le conteneur (10.1, 10.2) et le couvercle (11.1, 11.2) pour assurer un mouvement relatif du conteneur (10.1, 10.2) par rapport au couvercle (11.1, 11.2) et pour conférer à la cartouche sa première configuration ou sa deuxième configuration.

2. Cartouche selon la revendication 1, **caractérisée en ce que** le conteneur (10.1, 10.2) comporte un boîtier (103.1, 103.2) cylindrique en forme de barillet présentant un axe de révolution et **en ce que** lesdits compartiments (100.1, 100.2) sont formés par des parois radiales (101.1, 101.2) autour de son axe de révolution.

3. Cartouche selon la revendication 2, **caractérisée en ce que** le couvercle à la forme d'un cône portant ledit capteur sur son flanc et agencé fixe par rapport audit barillet.

4. Cartouche selon la revendication 2, **caractérisé en ce que** le couvercle (11.2) a la forme d'un disque (113.2) portant ledit capteur et agencé fixe par rapport audit barillet.

5. Cartouche selon la revendication 3 ou 4, **caractérisée en ce que** lesdits moyens d'étanchéité comportent au moins un joint (12.1, 12.2) agencé entre le boîtier (103.1, 103.2) du conteneur (10.1, 10.2) et le couvercle (11.1, 11.2) de la cartouche (1.1, 1.2).

6. Cartouche selon la revendication 5, **caractérisée en ce que** le joint (12.1, 12.2) comporte une structure en treillis.

7. Cartouche selon l'une des revendications 1 à 6, **caractérisée en ce que** chaque électrode du capteur comporte une pastille agencée à fleur d'une surface du couvercle (11.1, 11.2).

8. Cartouche selon l'une des revendications 1 à 7, **caractérisée en ce qu'**elle comporte au moins une première ouverture de remplissage/vidange (105.1, 105.2) débouchant dans ladite première chambre (14a).

9. Cartouche selon l'une des revendications 1 à 8, **caractérisé en ce que** la première chambre comporte un volume élargi par rapport à celui de la deuxième chambre, et **en ce que** ledit couvercle (11.2) comporte une deuxième ouverture de remplissage/vidange (104.2) placée de manière à déboucher dans ladite première chambre dans ladite première configuration et à être obturée dans ladite deuxième configuration.

10. Cartouche selon l'une des revendications 1 à 9, **caractérisé en ce que** le capteur fait partie d'un ensemble capteur (C) comportant également une thermistance.

11. Dispositif de mesure électrochimique, **caractérisé en ce qu'**il comporte :
- Une cartouche de mesure électrochimique telle que définie dans l'une des revendications 1 à 10,
- Des moyens d'entraînement mécanique (21.1, 21.2) agencés pour coopérer mécaniquement avec ladite cartouche de mesure électrochimique pour assurer un mouvement relatif du conteneur de la cartouche par rapport au couvercle de la cartouche,
- Un ensemble de commande et de traitement (20.1, 20.2), agencé pour commander lesdits moyens d'entraînement mécanique (21.1, 21.2) et ledit capteur en fonction d'une séquence de commande déterminée.

12. Dispositif selon la revendication 11, **caractérisé en ce que** lesdits moyens d'entraînement mécanique (21.1, 21.2) et ledit ensemble de commande et de traitement (20.1, 20.2) sont regroupés dans un socle (2.1, 2.2) sur lequel est assemblée la cartouche de mesure électrochimique.

13. Dispositif selon la revendication 12, **caractérisé en ce que** le socle comporte une pièce intermédiaire (23.2) sur laquelle est fixée ladite cartouche (1.2) et **en ce qu'**il comporte un capot (3.2) venant recouvrir ladite cartouche (1.2) et se fixer sur ladite pièce intermédiaire (23.2).

14. Dispositif selon la revendication 13, **caractérisé en ce qu'**il comporte un organe d'appui (4.2) agencé entre ledit capot (3.2) et ladite cartouche (1.2).

15. Dispositif de mesure électrochimique selon l'une des revendications 11 à 14, **caractérisé en ce qu'**il comporte des organes de connexion électrique (115.1, 25.1, 220.2) agencés sur la cartouche (1.1, 1.2) et sur le socle (2.1, 2.2) et connectés audit capteur et à l'ensemble de commande et de traitement (20.1, 20.2).

16. Dispositif de mesure électrochimique selon l'une des revendications 11 à 15, **caractérisé en ce que** les moyens d'entraînement mécanique (21.1, 21.2) comportent au moins un moteur électrique doté d'un arbre rotatif sur lequel est positionnée la cartouche.

## Patentansprüche

1. Elektrochemische Messkartusche (1.1, 1.2), **dadurch gekennzeichnet, dass** sie umfasst:
- einen Behälter (10,1, 10.2), der mehrere Abteilungen (100.1, 100.2) beinhaltet,
- einen Deckel (11.1, 11.2), der so an dem Behälter befestigt ist, dass in der Kartusche ein Innenvolumen gebildet wird, das mindestens eine erste Kammer (14a) zur Aufnahme eines ersten zu analysierenden Fluids und eine zweite Kammer (14b) zur Aufnahme eines zweiten Fluids definiert,
- Dichteinrichtungen, um die erste Kammer hermetisch von der zweiten Kammer zu isolieren,
- einen elektrochemischen Messfühler, der mindestens eine Arbeitselektrode und eine Referenz- und mit dem Deckel fest verbundene Elektrode umfasst,
- wobei der Behälter und der Deckel zueinander beweglich angeordnet sind, um der Kartusche mindestens zwei verschiedene Betriebskonfigurationen zu verleihen, eine erste Konfiguration, in welcher der Fühler (C) in der ersten Kammer (14a) platziert ist, um mit dem in dieser ersten Kammer vorhandenen ersten Fluid in Kontakt zu gelangen und eine erste Messung an dem ersten Fluid auszuführen, und eine zweite Konfiguration, in welcher der Fühler (C) in der zweiten Kammer platziert ist, um mit dem in der zweiten Kammer vorhandenen zweiten Fluid in Kontakt zu gelangen und eine zweite Messung an dem zweiten Fluid auszuführen,
- Antriebseinrichtungen, die mit dem Behälter (10.1, 10.2) und dem Deckel (11.1, 11.2) zusammenwirken, um eine relative Bewegung des Behälters (10.1, 10.2) in Bezug auf den Deckel (11.1, 11.2) zu gewährleisten und um der Kartusche ihre erste Konfiguration oder ihre zweite Konfiguration zu verleihen.

2. Kartusche nach Anspruch 1, **dadurch gekennzeichnet, dass** der Behälter (10.1, 10.2) ein zylindrisches Gehäuse (103.1, 103.2) in Form einer Trommel umfasst, das eine Umdrehungsachse aufweist, und dass die Abteilungen (100.1, 100.2) durch radiale Wände (101.1, 101.2) um seine Umdrehungsachse herum gebildet sind.

3. Kartusche nach Anspruch 2, **dadurch gekennzeichnet, dass** der Deckel die Form eines Kegels hat, der an seiner Flanke den Fühler trägt und in Bezug auf die Trommel feststehend angeordnet ist.

4. Kartusche nach Anspruch 2, **dadurch gekennzeichnet, dass** der Deckel (11.2) die Form einer Scheibe (113.2) hat, die den Fühler trägt und in Bezug auf die Trommel feststehend angeordnet ist.

5. Kartusche nach Anspruch 3 oder 4, **dadurch gekennzeichnet, dass** die Dichteinrichtungen mindestens eine Dichtung (12.1, 12.2) umfassen, die zwischen dem Gehäuse (103.1, 103.2) des Behälters (10.1, 10.2) und dem Deckel (11.1, 11.2) der Kartusche (1.1, 1.2) angeordnet ist.

6. Kartusche nach Anspruch 5, **dadurch gekennzeichnet, dass** die Dichtung (12.1, 12.2) eine Gitterstruktur umfasst.

7. Kartusche nach einem der Ansprüche 1 bis 6, **dadurch gekennzeichnet, dass** jede Elektrode des Fühlers eine Anschlussfläche umfasst, die bündig mit einer Fläche des Deckels (11.1, 11.2) angeordnet ist.

8. Kartusche nach einem der Ansprüche 1 bis 7, **dadurch gekennzeichnet, dass** sie mindestens eine erste Füll-/Entleeröffnung (105.1, 105.2) umfasst, die in die erste Kammer (14a) mündet.

9. Kartusche nach einem der Ansprüche 1 bis 8, **dadurch gekennzeichnet, dass** die erste Kammer ein in Bezug auf das der zweiten Kammer erweitertes Volumen umfasst und dass der Deckel (11.2) eine zweite Füll-/Entleeröffnung (104.2) umfasst, die so platziert ist, dass sie in der ersten Konfiguration in die erste Kammer mündet und in der zweiten Konfiguration verschlossen ist.

10. Kartusche nach einem der Ansprüche 1 bis 9, **dadurch gekennzeichnet, dass** der Fühler zu einer Fühlereinheit (C) gehört, die auch einen Thermistor umfasst.

11. Elektrochemische Messvorrichtung, **dadurch gekennzeichnet, dass** sie umfasst:
― eine elektrochemische Messkartusche wie in einem der Ansprüche 1 bis 10 definiert,
― mechanische Antriebseinrichtungen (21.1, 21.2), die angeordnet sind, um mit der elektrochemischen Messkartusche mechanisch zusammenzuwirken, um eine relative Bewegung des Behälters der Kartusche in Bezug auf den Deckel der Kartusche zu gewährleisten,
― eine Steuerungs- und Verarbeitungseinheit (20.1, 20.2), die dazu eingerichtet ist, die mechanischen Antriebseinrichtungen (21.1, 21.2) und den Fühler in Abhängigkeit von einer bestimmten Steuerungssequenz zu steuern.

12. Vorrichtung nach Anspruch 11, **dadurch gekennzeichnet, dass** die mechanischen Antriebseinrichtungen (21.1, 21.2) und die Steuerungs- und Verarbeitungseinheit (20.1, 20.2) in einem Sockel (2.1, 2.2) zusammengefasst sind, auf dem die elektrochemische Messkartusche montiert ist.

13. Vorrichtung nach Anspruch 12, **dadurch gekennzeichnet, dass** der Sockel ein Zwischenstück (23.2) umfasst, auf dem die Kartusche (1.2) befestigt ist, und dass sie eine Kappe (3.2) umfasst, welche die Kartusche (1.2) abdeckt und an dem Zwischenstück (23.2) befestigt wird.

14. Vorrichtung nach Anspruch 13, **dadurch gekennzeichnet, dass** sie ein Druckelement (4.2) umfasst, das zwischen der Kappe (3.2) und der Kartusche (1.2) angeordnet ist.

15. Elektrochemische Messvorrichtung nach einem der Ansprüche 11 bis 14, **dadurch gekennzeichnet, dass** sie elektrische Anschlusselemente (115.1, 25.1, 220.2) umfasst, die an der Kartusche (1.1, 1.2) und am Sockel (2.1, 2.2) angeordnet sind und an den Fühler und an die Steuerungs- und Verarbeitungseinheit (20.1, 20.2) angeschlossen sind.

16. Elektrochemische Messvorrichtung nach einem der Ansprüche 11 bis 15, **dadurch gekennzeichnet, dass** die mechanischen Antriebseinrichtungen (21.1, 21.2) mindestens einen Elektromotor umfassen, der mit einer drehenden Welle ausgestattet ist, auf der die Kartusche positioniert ist.

## Claims

1. Electrochemical measurement cartridge (1.1, 1.2), **characterized in that** it comprises:
- a container (10.1, 10.2) comprising a plurality of compartments (100.1, 100.2),
- a cover (11.1, 11.2) secured to said container such as to form, in said cartridge, an internal volume defining at least a first chamber (14a) designed to receive a first fluid for analysis and a second chamber (14b) designed to receive a second fluid,
- sealing means for hermetically insulating the first chamber from the second chamber,
- an electrochemical measurement sensor comprising at least one work electrode and one reference electrode and integral with said cover,
- said container and cover being arranged such as to move relative to one another in order to confer on the cartridge at least two distinct operating configurations, a first configuration in which the sensor (C) is placed in the first chamber (14a) to enter into contact with the first fluid present in said first chamber and to perform a first measurement on the first fluid, and a second configuration in which the sensor (C) is placed in the second chamber to enter into contact with said second fluid present in said second chamber and to perform a second measurement on the second fluid,
- driving means interacting with the container (10.1, 10.2) and the cover (11.1, 11.2) such as to ensure a relative movement between the container (10.1, 10.2) and the cover (11.1, 11.2) and to confer on the cartridge its first configuration or its second configuration.

2. Cartridge according to Claim 1, **characterized in that** the container (10.1, 10.2) comprises a cylindrical housing (103.1, 103.2) in the form of an axisymmetric barrel, and **in that** said compartments (100.1, 100.2) are formed by radial walls (101.1, 101.2) around the axis of revolution thereof.

3. Cartridge according to Claim 2, **characterized in that** the cover has the form of a cone carrying said sensor on its flank and arranged stationary relative to said barrel.

4. Cartridge according to Claim 2, **characterized in that** the cover (11.2) has the form of a disk (113.2) carrying said sensor and arranged stationary relative to said barrel.

5. Cartridge according to Claim 3 or 4, **characterized in that** said sealing means comprise at least one seal (12.1, 12.2) arranged between the housing (103.1, 103.2) of the container (10.1, 10.2) and the cover (11.1, 11.2) of the cartridge (1.1, 1.2).

6. Cartridge according to Claim 5, **characterized in that** the seal (12.1, 12.2) comprises a lattice structure.

7. Cartridge according to one of Claims 1 to 6, **characterized in that** each electrode of the sensor comprises a pad arranged flush with a surface of the cover (11.1, 11.2).

8. Cartridge according to one of Claims 1 to 7, **characterized in that** it comprises at least a first filling/emptying opening (105.1, 105.2) opening out in said first chamber (14a).

9. Cartridge according to one of Claims 1 to 8, **characterized in that** the first chamber comprises a volume that is enlarged relative to that of the second chamber, and **in that** said cover (11.2) comprises a second filling/emptying opening (104.2) placed such as to open out in said first chamber in said first configuration and to be closed off in said second configuration.

10. Cartridge according to one of Claims 1 to 9, **characterized in that** the sensor forms part of a sensor assembly (C), also comprising a thermistor.

11. Electrochemical measurement device, **characterized in that** it comprises:
- an electrochemical measurement cartridge such as defined in one of Claims 1 to 10,
- mechanical driving means (21.1, 21.2) arranged such as to interact mechanically with said electrochemical measurement cartridge such as to ensure a relative movement between the container of the cartridge and the cover of the cartridge,
- a control and processing assembly (20.1, 20.2) arranged such as to control said mechanical driving means (21.1, 21.2) and said sensor as a function of a determined control sequence.

12. Device according to Claim 11, **characterized in that** said mechanical driving means (21.1, 21.2) and said control and processing assembly (20.1, 20.2) are grouped together in a base (2.1, 2.2) on which the electrochemical measurement cartridge is assembled.

13. Device according to Claim 12, **characterized in that** the base comprises an intermediate component (23.2) on which said cartridge (1.2) is secured, and **in that** it comprises a cap (3.2) covering said cartridge (1.2) and secured to said intermediate component (23.2).

14. Device according to Claim 13, **characterized in that** it comprises a support member (4.2) arranged between said cap (3.2) and said cartridge (1.2).

15. Electrochemical measurement device according to one of Claims 11 to 14, **characterized in that** it comprises electrical connection members (115.1, 25.1, 220.2) arranged on the cartridge (1.1, 1.2) and on the base (2.1, 2.2) and connected to said sensor and to the control and processing assembly (20.1, 20.2).

16. Electrochemical measurement device according to one of Claims 11 to 15, **characterized in that** the mechanical driving means (21.1, 21.2) comprise at least one electric motor provided with a rotary shaft on which the cartridge is positioned.
